(19) Europäisches Patentamt
European Patent Office
Office européen des brevets

(11) Veröffentlichungsnummer: **0 444 295 A1**

(12) # EUROPÄISCHE PATENTANMELDUNG

(21) Anmeldenummer: **90124868.2**

(22) Anmeldetag: **20.12.90**

(51) Int. Cl.[5]: **C08L 77/00**, //(C08L77/00, 77:12,67:02)

(30) Priorität: **01.03.90 DE 4006403**

(43) Veröffentlichungstag der Anmeldung: **04.09.91 Patentblatt 91/36**

(84) Benannte Vertragsstaaten: **DE FR GB IT**

(71) Anmelder: **BAYER AG**
**W-5090 Leverkusen 1 Bayerwerk(DE)**

(72) Erfinder: **Heinz, Hans-Detlef, Dr.**
**Breslauer Strasse 31**
**W-4150 Krefeld(DE)**
Erfinder: **Pielartzik, Harald, Dr.**
**Doerperhofstrasse 39**
**W-4150 Krefeld(DE)**
Erfinder: **Buekers, Josef**
**Kneinstrasse 58a**
**W-4150 Krefeld(DE)**
Erfinder: **Müller, Peter-Rolf, Dr.**
**Paul-Klee-Strasse 76**
**W-4150 Krefeld(DE)**

(54) **Leichtfliessende Polyamid Formmassen.**

(57) Die Erfindung betrifft leichtfließende Polyamidformmassen, gekennzeichnet durch einen Gehalt an speziellen, neuen, flüssigkristallinen Verbindungen mit verzweigtem Aufbau, sowie diese neuen, verzweigten flüssigkristallinen Verbindungen.

EP 0 444 295 A1

Die Erfindung betrifft leichtfließende Polyamidformmassen, gekennzeichnet durch einen Gehalt an speziellen, neuen, flüssigkristallinen Verbindungen mit verzweigtem Aufbau, sowie diese neuen, verzweigten flüssigkristallinen Verbindungen.

Polyamide sind eine seit vielen Jahren für ein Vielzahl praktischer Anwendungen bewährte Klasse von Polymeren, die nach verschiedenen Verfahren hergestellt werden können, die aus sehr unterschiedlichen Polyamid-bildenden Bausteinen synthetisiert werden können und die im speziellen Anwendungsfall, allein oder auch in Kombination mit Verarbeitungshilfsmitteln, polymeren Legierungspartnern oder auch mineralischen Verstärkungsmaterialien (wie z.B. Füllstoffe oder Glasfasern), zu Werkstoffen mit speziell eingestellten Eigenschaftskombinationen ausgerüstet werden können. So werden Polyamide in großen Mengen zur Herstellung von Fasern, Kunststoff-Formteilen und Folien, aber auch z.B. als Schmelzkleber und Hilfsmittel in einer Vielzahl von Anwendungen technisch eingesetzt.

Ein sehr großer Teil der verschiedenen Polyamid-Formmassen wird im Spritzguß verarbeitet, d.h. das Polyamid wird aufgeschmolzen und unter Druck in eine Form gepreßt, in der es beim Abkühlen erstarrt. Hier spielt die Fließfähigkeit eine entscheidende Rolle; je leichter eine Polyamid-Masse fließt, desto besser kann die Form gefüllt werden. Dies ist insbesondere bei sehr dünnwandigen Teilen von größter Bedeutung.

Während die teilkristallinen Polyamide mittleren Molekulargewichts eine gute Fließfähigkeit besitzen, sinkt diese infolge der mit steigendem Molekulargewicht stark wachsenden Schmelzviskosität beim Übergang zu höhermolekularen Polyamiden schnell ab. In Anbetracht der Tatsache, daß die mechanischen Eigenschaften von Polyamiden mit steigendem Molekulargewicht noch besser werden, insbesondere die Schlagzähigkeit, stellt dies eine drastische Beschränkung ihres Einsatzbereiches dar.

Im Gegensatz zu den teilkristallinen, aliphatischen Polyamiden weisen amorphe Polyamide, insbesondere dann, wenn ihre Glastemperaturen oberhalb von ca. 150 °C liegen, schon bei relativ niedrigen Molekulargewichten sehr hohe Schmelzviskositäten und entsprechend geringe Fließfähigkeit auf. Auch hier ist die Verarbeitbarkeit also erschwert.

Bekanntlicherweise nehmen die teilkristallinen Polyamide, je nach Struktur, unterschiedliche Mengen Wasser auf. Dies führt zu einer Erhöhung der Zähigkeit, jedoch zu einer Verringerung der Steifigkeit, da das Wasser als Weichmacher wirkt.

Zur Erhöhung der Steifigkeit werden Polyamide daher seit langem mit anorganischen Verstärkungsstoffen, z.B. Glasfasern oder mineralischen Füllstoffen, ausgerüstet.

Die durch die anorganischen Verstärkungsstoffe erzielte Erhöhung von Steifigkeit, Härte, Wärmeformbeständigkeit und Dimensionsstabilität wird jedoch in aller Regel durch Nachteile erkauft, insbesondere durch eine verminderte Fließfähigkeit - besonders bei faserförmigen Verstärkungsstoffen - wodurch die Verarbeitbarkeit erschwert wird.

Die verringerte Fließfähigkeit hat zur Folge, daß, insbesondere für großflächige Formteile, zum Füllen der Form immer mehr Angußstellen benötigt werden, d.h. die Werkzeuge werden immer aufwendiger. Dadurch bedingt tritt auch eine größere Zahl unerwünschter Fließnähte auf, die die optischen und mechanischen Gebrauchseigenschaften der Formteile beeinträchtigen können. Weiterhin wird es sehr schwierig, einwandfreie Oberflächenqualitäten und dünnwandige Formteile herzustellen.

Es wäre daher von großer technologischer Bedeutung, wenn die Fließfähigkeit o.g. Polyamidtypen drastisch verbessert werden könnte.

Polyamid-Legierungen weisen je nach Art des polymeren Legierungspartners unterschiedliche Eigenschaften im Vergleich zur reinen PA-Komponente auf und sind somit besonders wertvolle Werkstoffe.

Wohlbekannte Legierungen stellen z.B. die schlagzäh modifizierten Polyamide dar. Hier handelt es sich um zweiphasige Polymerlegierungen, welche zur Erhöhung der Schlag- bzw. Kerbschlagzähigkeit von Polyamiden im spritzfrischen Zustand oder auch bei tiefen Temperaturen spezielle elastomere Partner enthalten. Beispiele für solche Legierungspartner sind z.B. Dien- und Acrylatkautschuke, EPDM, Ethylen-Acrylsäure-Copolymere und andere, wie sie im Stand der Technik in großer Zahl beschrieben sind.

Zusätzlich zu dem Elastomermodifikator können Verstärkungsstoffe anwesend sein; in solchen Legierungen sind dann sowohl Zähigkeit als auch Steifigkeit gegenüber nicht modifizierten Polyamiden erhöht.

Eine weitere große Gruppe von Polyamid-Legierungen enthält z.B. amorphe Thermoplasten mit gegenüber Standardpolyamiden erhöhter Glastemperatur und Steifigkeit.

Dadurch wird die Wasseraufnahme der Polyamide verringert und die Wärmeformbeständigkeit (gemessen z.B. durch die Heat-distortion-Temperatur (HDT)) sowie die Steifigkeit erhöht. Beispiele für Legierungspartner dieser Art sind Polystyrol, ABS, Polycarbonat, aromatische Polyester-(Carbonate), Polyphenylenoxide, Polymethylmethacrylat, Polyethersulfone und andere mehr. Diese Legierungen können auch zusätzlich noch Schlagzähmodifikatoren enthalten.

Auch Legierungen von Polyamiden mit teilkristallinen Thermoplasten sind bekannt.

Von Nachteil ist allerdings, daß auch diese PA-Legierungen i.a. eine gegenüber der reinen PA-Komponente stark verringerte Fließfähigkeit besitzen und ihre Verarbeitbarkeit daher erschwert ist. Dies gilt insbesondere dann, wenn die Legierungen zusätzlich noch Verstärkungsstoffe enthalten.

Daher wäre es auch für diese Werkstoffe von großer technologischer Bedeutung, die Fließfähigkeit deutlich erhöhen zu können und somit ihre Verarbeitbarkeit zu hochwertigen Formteilen zu erleichtern. Dadurch könnte auch die Verarbeitungstemperatur gesenkt werden, was eine geringere Materialbelastung bedeutet. Dies wirkt sich besonders bei Legierungen mit Kautschukmodifikatoren positiv aus.

Überraschend wurde nun gefunden, daß spezielle verzweigte, flüssigkristalline, oligomere Additive, schon in sehr geringen Mengen den Polyamiden zugesetzt, eine drastische Erhöhung der Fließfähigkeit von Polyamidformmassen bewirken. Darüber hinaus kann durch diese Maßnahme gegebenenfalls auch eine Reihe mechanischer Eigenschaften sowie u.U. die Wärmeformbeständigkeit verbessert werden. Weiterhin kann durch diese Maßnahme auch gegebenenfalls die Wasseraufnahme der Polyamide verringert sowie die Kristallisationsgeschwindigkeit und der Kristallisationsgrad erhöht werden, was sich durch verbesserte Dimensionsstabilität von Formteilen und längere Verarbeitbarkeit geöffneter Gebinde, sowie u.U. geringere Zykluszeiten äußern kann.

Gegenstand der Erfindung sind daher neue, leichtfließende Polyamid-Formmassen, dadurch gekennzeichnet, daß sie durch Vermischen von

1) 85-99,9 Gew.-% an sich bekannter Polyamide mit

2) 0,1 bis 15 Gew.-%, bevorzugt 0,3 bis 8 Gew.-%, besonders bevorzugt 0,5 bis 5 Gew.-%, oligomerer, flüssigkristalliner Ester- und/oder Esteramid-Oligomerer mit verzweigtem Aufbau, wobei die Seitenäste, sowie gegebenenfalls ein Teil der Hauptkette, eine Struktur nach Formel (I),

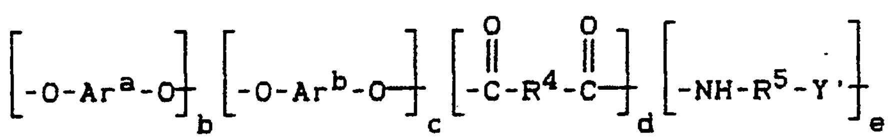

**Formel (I)**

worin

| | |
|---|---|
| $Ar^a$ | ein bivalenter, gegebenenfalls substituierter, ein- oder mehrkerniger aromatischer Rest mit 6-24 C-Atomen ist, wobei der mehrkernige Rest direkt verknüpft oder auch anelliert sein kann, |
| $Ar^b$ | einen bivalenten, gegebenenfalls substituierten, ein- oder mehrkernigen aromatischen Rest mit 6-30 C-Atomen darstellt, wobei der mehrkernige Rest unterschiedlich verknüpft sein kann, |
| $R^4$ bzw. $R^5$ | für einen Alkylrest mit 0-40 ($R^4$) bzw. 3-40 ($R^5$) C-Atomen stehen oder beide auch für einen cycloaliphatischen Rest mit 5-15 C-Atomen stehen können oder die Bedeutung eines gegebenenfalls substituierten bivalenten, ein- oder mehrkernigen aromatischen Restes mit 6-24 C-Atomen haben, wobei der mehrkernige Rest unterschiedlich über eine Bindung oder auch anelliert verknüpft sein kann, |
| Y' | für -O-, |

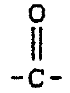 **oder**

-NH- steht, und im Falle der Verknüpfung mit einer Endgruppe

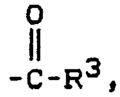

wobei $R^3$ einen aromatischen Rest mit 6-24 C-Atomen, besonders bevorzugt

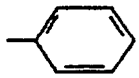 , 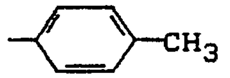 und 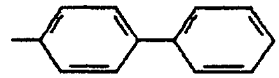 ,

bedeutet, für die Reste -O- oder -NH- steht, und

b = Null bis 10, vorzugsweise bis 8, insbesondere bis 4,
c = 1 bis 9, vorzugsweise bis 7, insbesondere 1 bis 4,
d = Null bis 9, vorzugsweise bis 7, insbesondere bis 3,
e = Null bis 3, vorzugsweise bis 2, ist, aufweisen,

dadurch gekennzeichnet, daß als Verzweiger Carbonsäuren und/oder Alkohole und/oder Amine bzw. Verbindungen mit mehr als einer dieser unterschiedlichen funktionellen Gruppen im Molekül mit einer Gesamtfunktionalität von mindestens 3 eingesetzt werden in einer Menge von 0,001- ungefähr 30 Gew.-%, bevorzugt 0,05-20 Gew.-%, bezogen auf die Summe der Gewichte der Bausteine mit einer Funktionalität von 2 und weniger und wobei bevor zugt zusätzlich monofunktionelle Bausteine (Monocarbonsäure, Monophenole etc.) als Kettenabbrecher eingesetzt werden, wobei die Länge der Seitenäste in etwa gleich oder auch z.B. ein Ast deutlich länger als die anderen sein kann, und wobei die Additive ein Molekulargewicht ($\overline{M}_n$) von ungefähr 500 bis ungefähr 8000, bevorzugt 800 bis 6000 und ganz gesonders bevorzugt 800-5000, aufweisen,

sowie gegebenenfalls

3) 0,001-150 Gew.-%, bezogen auf die Summe der Gewichte der Komponenten 1) und 2), an üblichen Zusatzstoffen, wobei die Zusatzstoffe wahlweise auch ganz oder teilweise schon in den unter 1) genannten Polyamiden enthalten sein können,

hergestellt werden.

Gegenstand der Erfindung sind auch die neuen LC-Additive gemäß 2).

Als bivalente aromatische Reste ($Ar^a$) in der Formel (I) kommen solche in Betracht, die den aromatischen Hydroxycarbonsäuren der Formeln

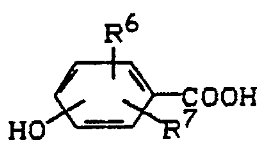 und 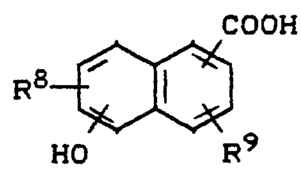

(II) (III)

zugrundeliegen, worin

$R^6$ bis $R^9$ $C_1$-$C_4$-Alkyl (vorzugsweise Methyl, Ethyl), $C_1$-$C_4$-Alkoxy (vorzugsweise Methoxy, Ethoxy), $C_6$-$C_{10}$-Aryl oder -Aryloxy (vorzugsweise Phenyl, Phenyloxy, Naphthyl, Naphthyloxy, Biphenyl, Biphenyloxy, Tolyl, Tolyloxy), $C_7$-$C_{12}$-Alkylaryl (vorzugsweise Benzyl), Halogen (vorzugsweise Chlor und Brom) oder Wasserstoff bedeuten, und die Valenzen zwischen Kern und Hydroxylgruppe, sowie zwischen Kern und Carboxylgruppe einen Winkel von 45 bis 180° bilden.

Bevorzugte aromatische Hydroxycarbonsäuren sind 4-Hydroxy-3-methylbenzoesäure, 4-Hydroxy-3-methoxybenzoesäure, 4-Hydroxybenzoesäure, 3-Hydroxybenzoesäure, 6-Hydroxy-2-naphthoesäure. Besonders bevorzugt sind 4-Hydroxybenzoesäure, 3-Hydroxybenzoesäure und 6-Hydroxy-2-naphthoesäure.

Die aromatischen Hydroxycarbonsäuren haben die OH-Gruppe vorzugsweise symmetrisch (1,4-Phenylen- oder 2,6-Naphthylen- oder 4,4'-diphenyl-Positionen) zur Carboxylgruppe.

Als bivalente aromatische Reste ($Ar^b$) der Formel (I) kommen solche in Betracht, die den Diphenolen der Formel (IV)

HO-Z-OH (IV) zugrundeliegen,

worin

Z einen zweiwertigen ein- oder mehrkernigen aromatischen Rest mit 6 bis 30 C-Atomen bedeutet, wobei Z derart gebaut ist, daß die beiden OH-Gruppen direkt an je ein C-Atom eines aromatischen

Systems gebunden sind und die beiden Valenzen einen Winkel von 45 bis 180° bilden.

Die aromatischen Reste können durch 1 bis 4 $C_1$-$C_4$-Alkyl-, $C_1$-$C_4$-Alkoxy-, Phenyl-, Phenoxy-, Benzyl- oder Halogenreste (vorzugsweise Chlor und Brom) substituiert sein und umfassen neben m/p-Phenylen-, 2,6- oder 1,5-Naphthylen- und 4,4'-Biphenylen-Resten auch durch Sauerstoff, Schwefel, Carbonyl, Sulfonyl, oder Azomethin, $C_1$-$C_{18}$-, vorzugsweise $C_1$-$C_4$-Alkylen oder -Alkyliden, (alkylsubstituiertes) Cyclohexylen oder -hexyliden oder -$O(CH_2)_nO$-mit n = 2 bis 4 verbundene Phenylenreste.

Bevorzugte Diphenole sind z.B. Hydrochinon, 4,4'-Dihydroxydiphenyl, 4,4'-Dihydroxydiphenylether, 4,4'-Dihydroxydiphenylethan, 4,4'-Dihydroxydiphenoxyethan, 3,5'-Dihydroxydiphenyl, 3,5'-Dihydroxydiphenylether, 1,5-Dihydroxynaphthalin, 2,6-Dihydroxynaphthalin, 1,4-Dihydroxynaphthalin, Methylhydrochinon, Phenylhydrochinon, 2,2'-Dimethyl-4,4'-dihydroxydiphenyl, 3,3',5,5'-Tetramethyl-4,4'-dihydroxydiphenyl, 1,2-(2-Chlor-4-hydroxyphenoxy)-ethan, 4-Methoxy-2,6-dihydroxynaphthalin, Resorcin, 3,4'-Dihydroxydiphenyl, 1,6-Dihydroxynaphthalin, 1,7-Dihydroxynaphthalin, 2,7-Dihydroxynaphthalin, 4-Chlorresorcin, 4-Phenylresorcin, 4-Ethoxyresorcin, 2,5-Dichlor-1,6-dihydroxynaphthalin und 4-Methoxy-2,7-dihydroxynaphthalin.

Besonders bevorzugte Diphenole sind Hydrochinon und 4,4'-Dihydroxydiphenyl.

Als bivalente Reste ($R^4$) der Formel (I) kommen solche in Betracht, die den Dicarbonsäuren der Formel (V)

HOOC-$R^4$-COOH (V) zugrundeliegen,

worin

$R^4$ für $C_mH_{2m}$ mit m = 0-40, bevorzugt von 0-20 und von 30-38, oder auch für einen cycloaliphatischen Rest mit 5-15 C-Atomen steht, oder bevorzugt

einen bivalenten aromatischen Rest mit 6 bis 24 C-Atomen, vorzugsweise mit 6 bis 16 C-Atomen bedeutet, wobei die beiden Valenzen einen Winkel von 45 bis 180° bilden. Die bivalenten aromatischen Reste können durch 1 bis 4 $C_1$-$C_4$-Alkyl-, $C_1$-$C_4$-Alkoxy-, Phenyl-, Phenoxy-, Benzyl- oder Halogenreste (vorzugsweise Chlor und Brom) substituiert sein und umfassen neben 1,4-Phenylen-Resten, 1,5- oder 2,6-Naphthylen-Resten und 4,4'- oder 3,5'-Biphenylen-Resten auch durch Sauerstoff, Schwefel, Carbonyl, Sulfonyl, $C_1$-$C_4$-Alkylen oder -Alkyliden, Cyclohexylen oder -hexyliden oder -$O(CH_2)_nO$- mit n = 1 bis 4 verbundene Phenylenreste, vorzugsweise in symmetrischer Substitution ("para-Stellung").

Bevorzugt sind folgende (cyclo)aliphatische Dicarbonsäuren: Oxalsäure, Bernsteinsäure, Adipinsäure, Korksäure, Azelainsäure, Trimethyladipinsäure, Sebacinsäure, Dodecandisäure, Dimerfettsäuren und 1,4-Cyclohexandicarbonsäure.

Besonders bevorzugt werden Oxalsäure, Adipinsäure, Sebazinsäure und Dimerfettsäuren eingesetzt.

Bevorzugte aromatische Dicarbonsäuren sind solche, die folgenden bivalenten Resten zugrundeliegen: 1,4-Phenylen-, 1,4-Naphthylen- oder 4,4'-Biphenylen-, worin die beiden Bindungen sich koaxial in entgegengesetzte Richtungen erstrecken, oder 1,5-Naphthylen-Reste, 2,6-Naphthylen-Reste oder 3,5'-Biphenylen-Reste, worin die beiden in entgegengesetzte Richtungen zeigenden Bindungen parallel zueinander verschoben sind, sowie 1,3-Phenylen-Reste, 1,3-, 1,6-, 1,7- oder 2,7-Naphthylen-Reste oder 3,4'-Biphenylen-Reste, worin die beiden Bindungen nicht an benachbarten Atomen lokalisiert sind und sich nicht koaxial oder parallel verschoben in entgegengesetzte Richtungen erstrecken.

Bevorzugte aromatische Dicarbonsäuren sind 1,4-Naphthalindicarbonsäure, 1,5-Naphthalindicarbonsäure, 2,6-Naphthalindicarbonsäure, Biphenyl-4,4'-dicarbonsäure, Biphenyl-3,3'-dicarbonsäure, Diphenoxyethan-4,4'-dicarbonsäure, Diphenylether-4,4'-dicarbonsäure, Methylterephthalsäure, Methoxyterephthalsäure, Chlorterephthalsäure, 4-Chlornaphthalin-2,7-dicarbonsäure, 2,6-oder 2,7-Naphthalindicarbonsäure, Biphenyl-3,4'-dicarbonsäure, 4-Methylisophthalsäure, 5-Methylisophthalsäure, Diphenylether-4,4'-dichlor-3,3'-dicarbonsäure, Iso- und Terephthalsäure.

Besonders bevorzugt sind Iso- und Terephthalsäure.

Es können sowohl ausschließlich aliphatische oder aromatische Dicarbonsäuren als auch Mischungen von beiden eingesetzt werden.

Als bivalente Reste ($R^5$) der Formel (I) kommen solche in Betracht, die den Aminoverbindungen der Formel (VI)

$H_2N$-$R^5$-Y (VI) zugrundeliegen,

worin

$R^5$ für $C_mH_{2m}$ mit m = 3 bis 40, bevorzugt 4 bis 12, und einen cycloaliphatischen Rest mit 5 bis 15 C-Atomen (5-6 Ring-C-Atomen), und

Y für OH, COOH oder $NH_2$ stehen, oder worin $R^5$

einen bivalenten aromatischen Rest mit 6 bis 24 C-Atomen, vorzugsweise mit 6 bis 16 C-Atomen bedeutet, wobei die beiden Valenzen einen Winkel von 45 bis 180° bilden. Die bivalenten aromatischen Reste können durch 1 bis 4 $C_1$-$C_4$-Alkyl-, $C_1$-$C_4$-Alkoxy-, Phenyl-, Phenoxy-, Benzyl- oder Halogenreste (vorzugsweise Chlor und Brom) substituiert sein und umfassen neben Phenylen-, Naphthylen- und Biphenylen-Resten auch durch Sauerstoff, Schwefel, Carbonyl, Sulfonyl, $C_1$-$C_4$-Alkylen oder -Alkyliden, Cyclohexylen oder -hexyliden oder $-O(CH_2)_nO-$mit n = 1 bis 4 verbundene Phenylenreste.

Anstelle der aliphatischen Aminocarbonsäuren können auch die entsprechenden Lactame, z.B. Caprolactam anstatt von $\epsilon$-Aminocapronsäure, eingesetzt werden.

Bevorzugte (cyclo)aliphatische Aminocarbonsäuren sind $\epsilon$-Aminocapronsäure bzw. Caprolactam, $\omega$-Aminoundecansaure, $\omega$-Aminododecansäure bzw. Laurinlactam, 4-Aminocyclohexyl-carbonsäure; bevorzugte aromatische Aminocarbonsäuren sind 4-Aminobenzoesäure oder 6-Amino-2-naphthoesäure.

Besonders bevorzugt sind $\epsilon$-Aminocapronsäure bzw. Caprolactam, 4-Aminobenzoesäure und 6-Amino-2-naphthoesäure.

Bevorzugte Aminophenole sind z.B.:

3-Aminophenol, 4-Aminophenol, 3-Amino-2-methylphenol, 3-Amino-4-methylphenol, 5-Amino-1-naphthol, 6-Amino-1-naphthol, 5-Amino-2-naphthol, 7-Amino-2-naphthol, 8-Amino-2-naphthol, 6-Amino-2-naphthol und 4'-Amino-1-hydroxybiphenyl, besonders bevorzugt sind 4-Aminophenol und 3-Aminophenol, sowie 4'-Amino-1-hydroxy-biphenyl.

Als Verzweiger sind z.B. Tricarbonsäuren wie beispielsweise Benzol-1,3,5-tricarbonsäure und Benzol-1,2,4-tricarbonsäure, Tetracarbonsäuren wie beispielsweise Pyromellithsäure (Benzol-1,2,4,5-tetracarbonsäure) und Benzophenon-2,2',3,3'-tetracarbonsäure, oder Acrylsäurehomo- und Copolymerisate bzw. geeignete Derivate dieser Carbonsäuren, Trisphenole wie z.B. Pyrogallol oder Phloroglucin, Polyphenole wie z.B. Phenol-Formaldehyd-Kondensate (bevorzugt Novolake, d.h. bei Unterschuß an Formaldehyd sauer katalysiert hergestellte niedermolekulare Phenolharze), Polyvinylphenole, Dihydroxycarbonsäuren wie z.B. 3,5-Dihydroxybenzoesäure, Hydroxydicarbonsäuren wie z.B. 5-Hydroxyisophthalsäure, Polyamine wie z.B. Diethylentriamin, Triethylentetramin, Pentaethylenhexamin u.a., gegebenenfalls im Gemisch, geeignet.

Bevorzugt werden Verzweiger eingesetzt, die entlang einer Hauptkette die funktionellen Gruppen in den Seitenketten tragen, so daß idealisiert ein kammartiger Aufbau der Additive mit flüssigkristallinen Seitenketten nach Formel (I) resultiert.

Solche bevorzugt einzusetzenden Verzweiger sind beispielsweise Novolake, Oligo- oder Polyvinylphenole bzw. Copolymere und Oligo- oder Polyacrylsäuren bzw. Copolymere.

Weiterhin sind als solche Verzweiger die aliphatischen Polyamine, speziell Diethylentriamin, Triethylentetramin sowie die höheren Homologen, bevorzugt.

Bevorzugte Additive 2) sind solche, die pro Seitenast durchschnittlich 3 bis 25, besonders bevorzugt 4 bis 20, insbesondere 4 bis 12 aromatische Teilstrukturen enthalten (eine aromatische Teilstruktur ist als -Ardefiniert und kann ein- oder mehrkernig sein). Sie weisen Molekulargewichte ($\overline{M}_n$) von ungefähr 500 bis 8.000, bevorzugt 800 bis 6.000 und besonders bevorzugt 800-5.000, auf.

Die Herstellung der oben beschriebenen neuen Additive erfolgt bevorzugt nach bekannten Schmelz- und Umesterungsverfahren, die auch zur Herstellung von thermotropen LC-Polymeren herangezogen werden (Direktveresterungsverfahren [EP-A 00 88 546], Acetatverfahren [EP-A 01 02 719, 134 204], Schmelzumesterung von Carbonsäurephenylestern mit Diphenolen (Diphenylesterverfahren) [EP-A 072 540, 070 539, 024 499, 45 499, DE-OS 20 25 971, EP 070 539 und EP 132 637]).

Die erfindungsgemäßen Verbindungen 2) werden besonders bevorzugt nach dem Acetat- und/oder nach dem Diphenylesterverfahren hergestellt, bevorzugt bei Anwesenheit von Kettenabbrechern (z.B. Monocarbonsäuren, wie Benzoesäure, 4-Methylbenzoesäure, 4-Methoxybenzoesäure, 4-Biphenylcarbonsäure, oder Monophenolen). Sie enthalten daher i.a. sowohl ihre genannten Struktureinheiten wie auch ihr Molekulargewicht in statistischer Verteilung und besitzen flüssigkristalline Eigenschaften. Sie werden als LC-Additive 2) in den angegebenen Mengen zur Herstellung der neuen Polyamid- Formmassen eingesetzt, wobei die flüssigkristallinen, von aliphatischen Bausteinen freien Verbindungen bevorzugt sind, insbesondere in statistischer Verteilung der Komponenten. Bevorzugt sind die funktionellen Gruppen weitestgehend abreagiert, jedoch kann die Stöchiometrie der Bausteine bei Bedarf auch so eingestellt werden, daß phenolische Endgruppen resultieren, z.B. dadurch, daß Bausteine mit phenolischen Gruppen wie z.B. Hydrochinon im Überschuß gegenüber solchen mit Carboxylgruppen eingesetzt werden.

Die neuen, verzweigten, flüssigkristallinen Additive 2) werden zu 0,1-15, bevorzugt 0,3-8 und besonders bevorzugt 0,5-5 Gew.-% bei der Herstellung der erfindungsgemäßen Polyamid-Formmassen eingesetzt. Sie können einzeln oder in einem beliebigen Gemisch eingesetzt werden.

Gegenstand der Erfindung sind auch die neuen, oligomeren, flüssigkristallinen Additive 2).

Gegenstände der Erfindung sind weiterhin die Verwendung der erfindungsgemäßen Polyamid-Formmassen zur Herstellung von Formkörpern, Folien, Fasern, Verbundwerkstoffen, Halbzeugen und anderen Gegenständen sowie Formkörper, Folien, Fasern, Verbundwerkstoffe, Halbzeuge und andere Gegenstände aus den neuen Polyamid-Formmassen und -Legierungen.

Polyamide:

Polyamide gemäß 1), welche erfindungsgemäß eingesetzt werden können, umfassen teilkristalline und amorphe Polyamide. Sie können einzeln oder in einem beliebigen Gemisch eingesetzt werden. Beispiele für Polyamide im Sinne der Erfindung sind PA 6, 11, 12, 46, 66, 69, 610, 612, 1010, 1212, 6/66-Copolyamide, 6/12-Copolyamide, 6/11-Copolyamide, 66/11-Copolyamide, 66/12-Copolyamide, 6/610-Copolyamide, 66/610-Copolyamide, 6/66/610-Terpolyamide, 6I6-Copolyamide, 6T6- bzw. 6T/6 Copolyamide, 6IT-Copolyamide, PA 6I, Copolyamide aus 1,4-Cyclohexandicarbonsäure, 2,2,4-und 2,4,4-Trimethylhexamethylendiamin, Copolyamide aus Terephthalsäure, 2,2,4- und 2,4,4-Trimethylhexamethylendiamin, Copolyamide aus Isophthalsäure, Laurinlactam und 3,5'-Dimethyl-4,4'-diamino-dicyclohexylmethan, Copolyamide aus Isophthalsäure, Azelainsäure und/oder Sebacinsäure und 4,4'-Diaminodicyclohexylmethan (bzw. Isomerengemische), Copolyamide aus Caprolactam, Isophthalsäure (+ ggf. Terephthalsäure) und 4,4'-Diaminodicyclohexylmethan (bzw. Isomerengemische), Copolyamide aus Caprolactam, Isophthalsäure (+ ggf. Terephthalsäure) und Isophorondiamin, Copolyamide aus Isophthalsäure (+ ggf. Terephthalsäure) und/oder anderen aromatischen oder aliphatischen Dicarbonsäuren, Hexamethylendiamin und/oder ggf. alkylsubstituierten Hexamethylendiaminen und in Nachbarschaft zu den Aminogruppen alkyl-substituierten 4,4'-Diaminodicyclohexylaminen, sowie andere Copolyamide oder Gemische verschiedener Polyamide aus Komponenten, wie sie üblicherweise zur Herstellung von Polyamide bekannt sind. Auch Polyamid-Blockpolymere wie Polyether- und Polyetheresteramide können eingesetzt werden.

Auch Polyamide, welche aus Dicarbonsäuren und Diisocyanaten herstellbar sind, sind geeignet.

Bevorzugte Polyamide, einzeln oder in einem beliebigen Gemisch, sind PA 6, 66, 610, 46, 11, 12, 1212, 6I, 6T6, 6T/6, 6/66-Copolyamide und Copolyamide aus Caprolactam, Isophthalsäure und Isophorondiamin.

Ganz besonders bevorzugt werden Polyamid 6 und 66 eingesetzt bzw. Gemische dieser Polyamide oder Copolyamide auf dieser Basis.

Legierungspartner

Als polymere Legierungspartner (einer der möglichen Zusatzstoffe gemäß 3)) zur Herstellung der neuen, leichtfließenden Polyamid-Formmassen kommen, allein oder im Gemisch, z.B. in Betracht: Dienkautschuke, Acrylat-Kautschuke, Polyethylene, Polypropylene, Ethylen-Propylen-Dien-Terpolymere, Ethylen- und/oder Propylen-Acrylsäure/AcrylesterCopolymere, Ethylen-Vinylacetat-Copolymere, Polyoctenylene, (α-Methyl)Stryrol-(Meth)acrylnitrilcopolymere, (Meth)Acrylnitril-Butadien-(α-Methyl)Styrol-Polymere (ABS), schlagzähe Polystyrole, Polycarbonate, aromatische Polyester(carbonate), Polyester wie z.B. Polyethylenterephthalat, Polysulfone, Polyphenylenoxide, Polyetherketone, Polyarylensulfide, Polyetheretherketone, Polyamidimide, Polyethersulfone, Polyetherimide, Polyesterimide und Polyimide, wie sie im Stand der Technik als Legierungspartner bzw. Modifikatoren bekannt sind.

Die polymeren Legierungspartner sollten, gegebenenfalls zumindest teilweise, chemisch so modifiziert sein, daß eine partielle Ankopplung der beiden Phasen, z.B. über Carbonsäuregruppen, erfolgt. Dies kann z.B. dadurch geschehen, daß ein Copolymer aus Ethylen und/oder Propylen und geringen Mengen Acrylsäure, oder ein mit geringen Mengen Maleinsäureanhydrid gepfropftes Ethylen-Propylen-Dien-Polymer oder ein mit geringen Mengen Maleinsäureanhydrid gepfropftes Polyphenylenoxid, allein oder im Gemisch mit unmodifizierten Legierungspartnern, eingesetzt werden. Ankopplung kann auch über Ester- oder Epoxidgruppen erfolgen. Es kann weiter z.B. dadurch geschehen, daß geeignete niedermolekulare und/oder polymere Verträglichkeitsvermittler anwesend sind; z.B. kann in Legierungen mit ABS ein Acrylnitril-Styrol-Acrylsäure-Terpolymer als Verträglichkeitsvermittler eingesetzt werdend Die Legierungspartner können auch reaktive Endgruppen aufweisen, welche mit dem Polyamid reagieren können, z.B. Amino-oder Carboxyl-terminierte Polydien-Kautschuke.

Die Kautschuke können auch in einer Kern-Mantel-Struktur gepfropft sein.

Die polymeren Legierungspartner können bereits vorab mit Polyamiden oder Mischungen von Polyamiden zu Polyamid-Legierungen (vor)vermischt werden, oder werden bevorzugt als einer der Zusatzstoffe entsprechend 3) eingesetzt. Dabei werden zur Herstellung von PA-Legierungen insbesondere mindestens ein Polyamid, mindestens ein polymerer Legierungspartner 3), mindestens ein LC-Additiv 2) sowie gegebenenfalls weitere, übliche Zusatzstoffe 3) wie Glasfasern oder auch Stabilisatoren, in der Schmelze (vorzugsweise in Extrudern) vermischt.

Im Fall von Polyamid-Legierungen ist also neben den Polyamiden gemäß 1) und den LC-Fließverbesserern gemäß 2) immer mindestens ein Zusatzstoff gemäß 3), nämlich der polymere Legierungspartner, anwesend in der fertigen Polyamid-Legierung.

Gegenstand der Erfindung ist auch die Verwendung der neuen verzweigten flüssigkristallinen, oligomeren Ester und/oder Esteramide (LC-Fließverbesserungsmittel-Zusatz 2)) in Mengen von 0,1 bis 15 Gew.-% (oder den obengenannten bevorzugten Mengen) bei der Herstellung von Polyamid-Formmassen. Weiterhin ist Erfindungsgegenstand ein Verfahren zur Herstellung der neuen leichtfließenden Polyamid-Formmassen durch Vermischen mindestens eines Polyamids 1), mindestens eines LC-Fließverbesserers 2) sowie gegebenenfalls der Zusatzstoffe gemäß 3) in der Schmelze, wobei gegebenenfalls die Zusatzstoffe gemäß 3) auch in einem gesonderten Schritt vorher in das Polyamid 1) eingebracht worden sein können, so daß dann unter 1) ein entsprechend modifiziertes Polyamid eingesetzt wird. Bevorzugt geschieht die Herstellung der neuen Polyamid-Formmassen und -Legierungen in Extrudern oder Knetern.

Der Zusatz von flüssig-kristallinen Polymeren zu Thermoplasten ist bekannt (siehe beispielsweise EP-OS 0 030 417). Ein Nachteil ist jedoch im allgemeinen die ungenügende Verträglichkeit der Thermoplasten mit den flüssig-kristallinen Polymeren.

Unschmelzbare, whiskerartige Poly-(p-oxybenzoat)-kristalle werden in der US-Patentschrift 4 673 724 als Verstärkungskomponente beschrieben. Diese sind wegen ihrer sehr hohen Schmelz- bzw. Erweichungspunkte jedoch sehr schwer herstellbar und mit anderen Polymeren besonders unverträglich.

In situ erzeugte Mischungen aus flüssig-kristallinen Polymeren und amorphen Thermoplasten sind ebenfalls bekannt. (Siehe beispielsweise G. Kiss, Polymer Engineering & Science, 27, Seiten 410-423 (1987)). Derartige Mischungen haben jedoch den Nachteil, daß die erreichbaren Verstärkungseffekte in starkem Maß von den Mischungsbedingungen abhängen und die Reproduzierbarkeit der Verarbeitungsbedingungen oft problematisch einzuhalten sind.

Hinzu kommt, daß bei der Herstellung derartiger Composites die Mischungspartner sehr unterschiedliche Schmelzviskositäten unter Verarbeitungsbedingungen besitzen, so daß zur Herstellung von solchen Composites nur eine beschränkte Zahl von geeigneten Polymeren bereitsteht.

Als Verarbeitungshilfsmittel für konventionelle Thermoplaste wie aromatische Polyester oder thermoplastisch schwer verarbeitbare, flüssigkristalline Polymere werden chemisch reaktive, flüssig-kristalline, aromatische Ester beschrieben, die durch Umesterung bei höherer Temperatur in die Polymerkette einkondensieren (Siehe US-Patent 4 650 836). Der Einbau der aromatischen, flüssig-kristallinen Ester in die Polymerkette führt jedoch zu einer chemischen Veränderung der Thermoplasten. Dies hat den Nachteil, daß in Abhängigkeit der Verarbeitungsbedingungen unterschiedliche Einbauverhältnisse und damit schlecht reproduzierbare Eigenschaften resultieren. Der überraschende Effekt der erfindungsgemüßen Mischung ist bei solchen Copolymerisaten jedoch nicht mehr vorhanden.

Die Herstellung der erfindungsgemßen, leichtfließenden Polyamid-Formmassen kann nach allen in der Thermoplast-Verarbeitung zur Abmischung üblichen Verfahren geschehen, wobei bevorzugt solche Bedingungen (Verweilzeiten/ Temperaturen) eingehalten werden sollten, daß keine bzw. nur eine geringe Umesterung erfolgt und bevorzugt die flüssigkristallinen Additive im wesentlichen unreagiert vorliegen.

Zur Herstellung der erfindungsgemäßen, LC-Fließverbesserer 2) enthaltenden, leicht fließenden Polyamid-Formmassen können beispielsweise die Polyamidkomponente(n) 1), die LC-Fließverbesserer 2) sowie die gegebenenfalls einzusetzenden Zusatzstoffe 3) (z.B. Legierungskomponenten, Verstärkungsstoffe, Stabilisatoren u.a.) in der Schmelze miteinander vermischt werden. Vorzugsweise werden die erf indungsgemäßen Polyamid-Formmassen und -Legierungen durch Mischen aller Ausgangskomponenten in üblichen Schneckenmaschinen hergestellt. Der flüssigkristalline LC-Fließverbesserer 2) kann dabei anfangs mit der Polyamid-Komponente 1) schon gemeinsam in den Extruder eindosiert oder erst zu einem späteren Zeitpunkt während der Extrusion den zu extrudierenden Massen zugesetzt werden.

Die LC-Fließverbesserer 2) können also zu jedem Zeitpunkt bei der Herstellung der erfindungsgemäßen Formmassen eingesetzt werden. Auch ein Zusatz unmittelbar vor der Verarbeitung von Polyamid-Formmassen ist möglich.

Die LC-Additive 2) können als solche oder auch in Form von Konzentraten in einem (vorzugsweise gleich hoch oder niedrigerschmelzenden) Polymeren zugegeben werden.

Die Polyamide 1) können die Zusatzstoffe gemäß 3) bereits vorher eingemischt enthalten. Bevorzugt werden aber diese Komponenten 3) zusammen mit den flüssigkristallinen Komponenten 2) und den Polyamiden 1) in einem Arbeitsgang vermischt.

Die erfindungsgemäß mit LC-Fließverbesserern 2) modifizierten, leicht fließenden PA-Formmassen können noch weitere, übliche Zusatzstoffe 3) in der Menge von 0,001 bis 150 Gew.-%, bevorzugt 0,01 bis 100 Gew.-%, bezogen auf die Summe der Gewichte von 1) und 2), enthalten. Hier kommen neben polymeren Legierungspartnern Verstärkungsmaterialien (Glasfasern, Aramidfasern, Kohlenstoffasern, Glas-

kugeln, $SiO_2$, Kreide, Talkum, Kaolin, Glimmer u.a.), Weichmacher, Antioxidantien, Pigmente, Farbstoffe, Bewitterungsstabilisatoren (bzw. Stabilisatorkombinationen), Fließhilfsmittel, Entformungsmittel, Nukleierungsmittel, die Wasseraufnahme verringernde Zusätze (z.B. Monophenole, Bisphenole, (Alkyl)phenol-Formaldehyd-Kondensate (Novolake) u.a.), Flammschutzmittel und andere in Frage, wie sie für entsprechende Polyamidmassen grundsätzlich bekannt und vorgeschlagen sind. Die Zusatzstoffe gemäß 3) können unabhängig voneinander für sich oder in Form eines Konzentrats eingesetzt werden. Sie können aber auch schon ganz oder teilweise in den Polyamiden 1) enthalten sein.

Die erfindungsgemäßen Polyamid-Formmassen können z.B. nach den Verfahren des Spritzgießens und dar Extrusion zu Formkörpern und anderen Gegenständen verarbeitet werden. Sie eignen sich aufgrund ihrer drastisch verbesserten Fließfähigkeit insbesondere für großflächige und komplizierte Formteile, die sonst nur mit hohem technischem Aufwand bei der Verarbeitung, oft mit Oberflächenstörungen, oder häufig auch gar nicht, hergestellt werden können.

Vorzugsweise eignen sie sich für Anwendungen im Automobilbau.

Die erfindungsgemäßen PA-Formmassen zeichnen sich schon bei einer geringen Einsatzmenge an LC-Additiv 2) durch eine deutlich erhöhte Fließfähigkeit sowie gegebenenfalls auch durch verbesserte mechanische Eigenschaften und Wärmeformbeständigkeiten aus. Sie können sich weiterhin durch verringerte Wasseraufnahme sowie höhere Kristallisationsgeschwindigkeit und Kristallisationsgrad auszeichnen. Sie sind somit eine wertvolle Bereicherung des Standes der Technik.

Die folgenden Beispiele dienen zur Erläuterung der Erfindung, ohne sie darauf einzuschränken.

## Beispiele

### Beispiel 1

Herstellungsbeispiel für eine der erfindungsgemäßen flüssigkristallinen Verbindungen

207 g p-Hydroxybenzoesäure, 163,4 g Hydrochinon, 166,1 g Isophthalsäure, 3,1 g eines Phenol-Formaldehyd-Kondensats (Novolak; Phenol: $CH_2O^{\sim}$ 1:0,78), 122,1 g Benzoesäure und 468,2 g Acetanhydrid wurden zusammen mit 600 ppm Magnesium-Pulver unter Rühren aufgeheizt auf 160° C, 1,5 h lang bei dieser Temperatur belassen und schrittweise innerhalb von 4,5 h auf 260° C aufgeheizt, entsprechend der Destillationsgeschwindigkeit. Beim Erreichen dieser Endtemperatur wurde dann Vakuum angelegt, das innerhalb von ca. 1 h allmählich auf 2 mbar abgesenkt wurde, Insgesamt wurde 1,25 h lang bei 260° C gehalten. Das Produkt wurde in eine Schale gegossen und erkalten lassen. Ausbeute: 546 g. Das Produkt enthält noch 0,78 % Carboxylgruppen.

Die Verbindung weist im Polarisationsmikroskop von 160° C bis 300° C eine flüssigkristalline Phase auf.

### Beispiel 2

Prinzipiell analog zu Beispiel 1, mit dem Unterschied, daß der Hydrochinonanteil auf 156,8 g gesenkt und der Novolakanteil auf 15,6 g erhöht wurde, wurde eine der erfindungsgemäßen flüssigkristallinen Verbindungen hergestellt. Ausbeute: 92 %. Das Produkt enthält noch 1,3 % Carboxylgruppen.

Die Verbindung weist im Polarisationsmikroskop zwischen 130° C und 300° C eine flüssigkristalline Phase auf.

### Beispiel 3

193,4 g p-Hydroxybenzoesäure, 154,2 g Hydrochinon, 149,4 g Isophthalsäure, 437,4 g Acetanhydrid, 500 ppm Magnesiumpulver, 42 g 1,3,5-Benzoltricarbonsäure und 48,8 g Benzoesäure wurden unter Rühren auf 170° C aufgeheizt und 45 min lang dort gehalten. Mit sinkender Destillationsgeschwindigkeit wurde dann innerhalb von 3,25 h stufenweise auf 340° C aufgeheizt. Nach ca. 1,5 h wurde Vakuum angelegt, welches schrittweise bis auf 66 mbar erniedrigt wurde, insgesamt für 45 min.

Das Produkt wurde auf eine Schale gegossen und erkalten lassen. Ausbeute: 371 g. Das Produkt enthält noch ca. 0,7 % Carboxylgruppen.

Flüssigkristalliner Bereich (Polarisationsmikroskop): 190-330° C.

### Beispiele 4 - 7

Je 1 und 3 Gew.-% (bezogen auf Compound) der Verbindungen nach den Beispielen 1 und 2 wurden

mit einem 30 % Glasfaser verstärkten PA6 ($\eta_{rel}$) $\tilde{=}$ 2,9) bei 240° C und einem Durchsatz von 30 kg $h^{-1}$ über einen ZSK 53 Doppelwellenextruder compoundiert.

Die Daten für die Arbeitsaufnahme des Extruders (Maß für die Fließfähigkeit) sind in Tabelle 1 zusammengestellt.

Vergleichsbeispiel 1 (1293)

In der selben Weise wurde das 30 % GF-PA6 ohne erfindungsgemäßes LC-Additiv compoundiert (Tabelle 1).

Tabelle 1

| Beispiel | LC-Additiv Bsp. | Menge[1)] [%] | A[2)] [A] | $\eta_{rel}$ |
|---|---|---|---|---|
| 4 | 1 | 1 | 38 | 3,1 |
| 5 | 1 | 3 | 35 | 2,9 |
| 6 | 2 | 1 | 40 | 3,25 |
| 7 | 2 | 3 | 37 | 3,1 |
| Vgl. 1 | - | - | 43 | 3,0 |

1) bezogen auf Compound

2) Arbeitsaufnahme in Ampere; je niedriger der Wert ist, desto besser die Fließfähigkeit.

Beispiele 8 und 9 und Vergleich 2

Eine Polymerlegierung auf Basis von Polyamid 6 und einem ABS-Polymerisat (KU 2-2600, ein Produkt der Bayer AG) wurde mit je 1 % der LC-Verbindungen der Beispiele 1 und 3 bzw. ohne Additiv bei ca. 290 bis 300° C compoundiert und in üblicher Weise aufgearbeitet.

Kerbschlagzähigkeiten, Schmelzviskositäten sowie MFI-Werte sind in Tabelle 2 zusammengestellt.

Man sieht, daß sowohl die Schmelzviskositäten als auch die MFI-Werte bei guten mechanischen Eigenschaften deutlich verbessert werden können, wobei schon eine Menge von 1 % ausreichend ist.

Tabelle 2

| Beispiel | LC-Additiv (n.Bsp.) | Menge [%] | $SV^{1)}$ bei 280° C $10_s^{-1}$ | $100_s^{-1}$ | $1000_s^{-1}$ | $1500_s^{-1}$ | $a_k^{2)}$ [$13m^{-2}$] | $MFI^{3)}$ [g] | $\eta_{rel}^{4)}$ |
|---|---|---|---|---|---|---|---|---|---|
| 8 | 1 | 1 | 2208 | 583 | 173 | 140 | 72.6 | 23,7 | 2,09 |
| 9 | 3 | 1 | 2260 | 709 | 213 | 170 | — | 29,2 | 2,06 |
| Vgl.2 | - | - | 2831 | 1008 | 298 | 234 | 76,5 | 16,9 | 2,14 |

1) Schmelzviskosität bei 280° C; Hochdruckkapillarviskosimeter, L/D = 30

2) Kerbschlagzähigkeit; ISO 180, Methode 1A

3) Melt-Flow-Index (DIN 53735 T.1); 270° C, 147,15N, L/D=4; [g, 10 $min^{-1}$]

4) 1 %ig in m-Kresol, 25° C

## Patentansprüche

1. Leichtfließende Polyamid-Formmassen, dadurch gekennzeichnet, daß sie durch Vermischen von
   1) 85-99,9 Gew.-% an sich bekannter Polyamide mit

2) 0,1 bis 15 Gew.-%, bevorzugt 0,3 bis 8 Gew.-%, besonders bevorzugt 0,5 bis 5 Gew.-% oligomerer, flüssigkristalliner Ester- und/oder Esteramid-Oligomerer mit verzweigtem Aufbau, wobei die Seitenäste sowie gegebenenfalls ein Teil der Hauptkette eine Struktur nach Formel (I),

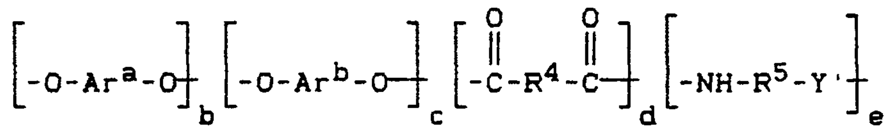

Formel (I)

worin

| | |
|---|---|
| $Ar^a$ | ein bivalenter, gegebenenfalls substituierter, ein- oder mehrkerniger aromatischer Rest mit 6-24 C-Atomen ist, wobei der mehrkernige Rest direkt verknüpft oder auch anelliert sein kann, |
| $Ar^b$ | einen bivalenten, gegebenenfalls substituierten, ein- oder mehrkernigen aromatischen Rest mit 6-30 C-Atomen darstellt, wobei der mehrkernige Rest unterschiedlich verknüpft sein kann, |
| $R^4$ bzw. $R^5$ | für einen Alkylrest mit 0-40 ($R^4$) bzw. 3-40 ($R^5$) C-Atomen stehen oder beide auch für einen cycloaliphatischen Rest mit 5-15 C-Atomen stehen können oder die Bedeutung eines gegebenenfalls substituierten bivalenten, ein- oder mehrkernigen aromatischen Restes mit 6-24 C-Atomen haben, wobei der mehrkernige Rest unterschiedlich über eine Bindung oder auch anelliert verknüpft sein kann, |
| Y' | für -O-, |

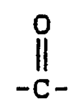 oder

-NH- steht, und im Falle der Verknüpfung mit einer Endgruppe

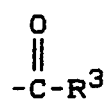,

wobei $R^3$ einen aromatischen Rest mit 6-24 C-Atomen, besonders bevorzugt

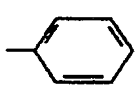, 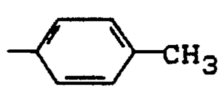 und 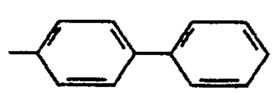,

bedeutet, für die Reste -O- oder -NH- steht, und

b = Null bis 10, vorzugsweise bis 8, insbesondere bis 4,
c = 1 bis 9, vorzugsweise bis 7, insbesondere 1 bis 4,
d = Null bis 9, vorzugsweise bis 7, insbesonder bis 3,
e = Null bis 3, vorzugsweise bis 2, ist, aufweisen,

dadurch gekennzeichnet, daß als Verzweiger Carbonsäuren und/oder Alkohole und/oder Amine bzw. Verbindungen mit mehr als einer dieser unterschiedlichen funktionellen Gruppen im Molekül mit einer Gesamtfunktionalität von mindestens 3 eingesetzt werden in einer Menge von 0,001- ungefähr 30 Gew.-%, bevorzugt 0,05-20 Gew.-%, bezogen auf die Summe der Gewichte der Bausteine mit einer Funktionalität von 2 und weniger und wobei bevorzugt zusätzlich monofunktionelle Bausteine als Kettenabbrecher eingesetzt werden, wobei die Länge der Seitenäste in etwa gleich oder auch z.B. ein Ast deutlich länger als die anderen sein kann, und wobei die Additive ein Molekulargewicht ($\overline{M}_n$) von

ungefähr 500 bis ungefähr 8000, bevorzugt 800 bis 6000 und besonders bevorzugt 800 bis 5000, aufweisen,
sowie gegebenenfalls

3) 0,001-150 Gew.-%, bezogen auf die Summe der Gewichte der Komponenten 1) und 2), an üblichen Zusatzstoffen, wobei die Zusatzstoffe wahlweise auch ganz oder teilweise schon in den unter 1) genannten Polyamiden enthalten sein können,

hergestellt werden.

2. Leichtfließende Polyamid-Formmassen nach Anspruch 1, dadurch gekennzeichnet, daß als Bausteine für die Seitenäste bzw. Hauptkette der Formel (I) der Additive 2) bevorzugt 4-Hydroxy-3-methylbenzoesäure, 4-Hydroxy-3-methoxybenzoesäure, 4-Hydroxybenzoesäure, 3-Hydroxybenzoesäure, 6-Hydroxy-2-naphthoesäure, Hydrochinon, 4,4'-Dihydroxydiphenyl, 4,4'-Dihydroxydiphenylether, 4,4'-Dihydroxydiphenylethan, 4,4'-Dihydroxydiphenoxyethan, 3,5'-Dihydroxydiphenyl, 3,5'-Dihydroxydiphenylether, 1,5-Dihydroxynaphthalin, 2,6-Dihydroxynaphthalin, 1,4-Dihydroxynaphthalin, Methylhydrochinon, Phenylhydrochinon, 2,2'-Dimethyl-4,4'-dihydroxydiphenyl, 3,3',5,5'-Tetramethyl-4,4'-dihydroxydiphenyl, 1,2-(2-Chlor-4-hydroxyphenoxy)-ethan, 4-Methoxy-2,6-dihydroxynaphthalin, Resorcin, 3,4'-Dihydroxydiphenyl, 1,6-Dihydroxynaphthalin, 1,7-Dihydroxynaphthalin, 2,7-Dihydroxynaphthalin, 4-Chlorresorcin, 4-Phenylresorcin, 4-Ethoxyresorcin, 2,5-Dichlor-1,6-di-hydroxynaphthalin und 4-Methoxy-2,7-dihydroxynaphthalin, 1,4-Naphthalindicarbonsäure, 1,5-Naphthalindicarbonsäure, 2,6-Naphthalindicarbonsäure, Biphenyl-4,4'-dicarbonsäure, Biphenyl3,3'-dicarbonsäure, Diphenoxyethan-4,4'-dicarbonsäure, Diphenylether-4,4'-dicarbonsäure, Methylterephthalsäure, Methoxyterephthalsäure, Chlorterephthalsäure, 4-Chlornaphthalin-2,7-dicarbonsäure, 2,6-oder 2,7-Naphthalindicarbonsäure, Biphenyl-3,4'-dicarbonsäure, 4-Methylisophthalsäure, 5-Methylisophthalsäure, Diphenylether-4,4'-dichlor-3,3'-dicarbonsäure, Iso- und Terephthalsäure, $\epsilon$-Aminocapronsäure bzw. Caprolactam, $\omega$-Aminoundecansäure, $\omega$-Aminododecansäure bzw. Laurinlactam, 4-Aminocyclohexyl-carbonsäure, 4-Aminobenzoesäure, 6-Amino-2-naphthoesäure, 3-Aminophenol, 4-Aminophenol, 3-Amino-2-methylphenol, 3-Amino-4-methylphenol, 5-Amino-1-naphthol, 6-Amino-1-naphthol, 5-Amino-2-naphthol, 7-Amino-2-naphthol, 8-Amino-2-naphthol, 6-Amino-2-naphthol und 4'-Amino-1-hydroxybiphenyl, Oxalsäure, Bernsteinsäure, Adipinsäure, Korksäure, Azelainsäure, Trimethyladipinsäure, Sebacinsäure, Dodecandisäure, Dimerfettsäuren, 1,4-Cyclohexandicarbonsäure, Benzoesäure, 4-Methylbenzoesäure, 4-Methoxybenzoesäure und 4-Biphenylcarbonsäure,
und besonders bevorzugt Hydrochinon, 4,4'-Dihydroxybiphenyl, 4-Aminophenol, 3-Aminophenol, 4'-Amino-1-hydroxybiphenyl, 4-Hydroxybenzoesäure, 3-Hydroxybenzoesäure, 6-Hydroxy-2-naphthoesäure, Isophthalsäure, Terephthalsäure, Oxalsäure, Adipinsäure, Sebazinsäure und Dimerfettsäuren, 4-Aminobenzoesäure und 6-Amino-2-naphthoesäure, $\epsilon$-Aminocapronsäure bzw. Caprolactam, Benzoesäure, 4-Methylbenzoesäure und 4-Biphenylcarbonsäure verwendet werden, und wobei die Additive 2) durchschnittlich bevorzugt 3-25 und besonders bevorzugt 4-20, insbesondere 4-12, aromatische Teilstrukturen pro Seitenast enthalten.

3. Leichtfließende Polyamidformmassen nach mindestens einem der Ansprüche 1 und 2, dadurch gekennzeichnet, daß als Verzweiger für die Additive 2) bevorzugt einerseits Verbindungen, die entlang einer Hauptkette die funktionellen Gruppen in der Seitenkette tragen, so daß idealisiert ein Kamm entsteht, wie beispielsweise Phenol-Formaldehyd-Kondensate (Novolake), Oligo- bzw. Polyvinylphenole, Oligo- bzw. Polyacrylsäuren, Diethylentriamin, Triethylentetramin und höhere Homologe, gegebenenfalls alle im Gemisch, und andererseits trifunktionelle aromatische Verbindungen wie Benzol-1,3,5-tricarbonsäure, Benzol-1,2,4-tricarbonsäure, Phloroglucin, Pyrogallol, 5-Hydroxyisophthalsäure, 3,5-Dihydroxybenzoesäure u.a.m., eingesetzt werden.

4. Leichtfließende Polyamid-Formmassen nach mindestens einem der Ansprüche 1 bis 3, dadurch gekennzeichnet, daß als Polyamid-Komponenten 1), einzeln oder im Gemisch, bevorzugt Polyamid 6, 66, 46, 610, 11, 12, 1212, 6I, 6T6, 6T/6, 6/66-Copolyamide und Copolyamide aus Caprolactam, Isophthalsäure und Isophorondiamin und besonders bevorzugt Polyamid 6 und 66 bzw. Copolyamid auf Basis dieser eingesetzt werden.

5. Leichtfließende Polyamid-Formmassen nach mindestens einem der Ansprüche 1 bis 4, dadurch gekennzeichnet, daß als polymere Legierungspartner 3) u.a. Dienkautschuke, Acrylat-Kautschuke, Polyethylen, Polypropylen, Ethylen/Propylen-Dien-Terpolymere, Ethylen- und/oder Propylen-Acrylsäure(ester)-Copolymere, Ethylen/Vinylacetat-Copolymere, Polyoctenylene, ($\alpha$-Methyl)styrol/-(Meth)acrylnitrilcopolymere, (Meth)Acrylnitril/-Butadien/($\alpha$-Methyl)styrol-Polymere (ABS), schlagzähe Polystyrole, Polycarbonate, aromatische Polyester(carbonate), Polyester wie z.B. Polyethylenterephthalat, Polysulfone, Polyphenylenoxide, Polyarylensulfide, Polyetherketone, Polyethersulfone, Polyetheretherketone, Polyetherimide, Polyesterimide, Polyamidimide und Polyimide eingesetzt werden, und gegebenenfalls niedermolekulare und/oder polymere Verträglichkeitsvermittler anwesend sind.

6. Leichtfließende Polyamid-Formmassen nach Anspruch 1, dadurch gekennzeichnet, daß als Zusatzstoffe gemäß 3) Verstärkungsmaterialien (Glasfasern, Aramidfasern, Kohlenstoffasern, Glaskugeln, $SiO_2$, Kreide, Talkum, Kaolin, Glimmer, $TiO_2$ u.a.), Weichmacher, Antioxidantien, Pigmente, Farbstoffe, Bewitterungsstabilisatoren (bzw. Stabilisatorkombinationen), Fließhilfsmittel, Entformungsmittel, Nukleierungsmittel, die Wasseraufnahme verringernde Zusätze (bevorzugt Monophenole, Bisphenole und (Alkyl)-phenol-Formaldehyd-Kondensate (Novolake)), Flammschutzmittel, polymere Legierungspartner u.a.m. eingesetzt werden können, wobei zur Herstellung von Polyamid-Legierungen immer mindestens ein polymerer Legierungspartner nach Anspruch 5 als Zusatzstoff gemäß 3) eingesetzt werden muß, und wobei die Zusatzstoffe gemäß 3) unabhängig voneinander für sich oder in Form eines Konzentrats zudosiert werden oder auch nach Vorvermischung mit dem Polyamid als in diesem enthalten zudosiert werden können.

7. Verfahren zur Herstellung der Polyamid-Formmassen nach Anspruch 1, dadurch gekennzeichnet, daß mindestens ein Polyamid gemäß 1), mindestens ein flüssigkristallines Additiv gemäß 2) sowie gegebenenfalls die weiteren Zusatzstoffe gemäß 3), wobei zur Herstellung von Polyamid-Legierungen immer mindestens ein polymerer Legierungspartner als Zusatzstoff gemäß 3) eingesetzt wird, und wobei die gegebenenfalls miteinzusetzenden Zusatzstoffe 3), auch polymere Legierungspartner, unabhängig voneinander für sich oder als Konzentrat eingesetzt werden können, oder auch schon in den Polyamiden 1) enthalten sein können, in der Schmelze, bevorzugt in Extrudern, vermischt werden, und die Schmelze in bekannter Weise aufgearbeitet wird.

8. Formkörper, Folien, Fasern, Halbzeuge, Verbundwerkstoffe und andere Gegenstände aus Polyamid-Formmassen nach mindestens einem der Ansprüche 1 bis 6.

9. Verzweigte, flüssigkristalline Additive gemäß 2) nach Anspruch 1, mit bevorzugten Verzweigern nach Anspruch 3 und bevorzugten bzw. besonders bevorzugten Bausteinen der Seitenäste bzw. der Hauptkette gemäß Formel (I) nach Anspruch 2, bevorzugt mit weitestgehend abreagierten funktionellen Gruppen oder mit phenolischen Endgruppen.

10. Verwendung von verzweigten, oligomeren, flüssigkristallinen Estern und/oder Esteramiden 2) nach Anspruch 9 als flüssigkristalline Fließverbesserer für Polyamide in Mengen von 0,1 bis 15 Gew.-%, bezogen auf die Summe der Gewichte von 1) und 2), zur Herstellung von leichtfließenden Polyamid-Formmassen.

Europäisches Patentamt

# EUROPÄISCHER RECHERCHENBERICHT

Nummer der Anmeldung

EP 90 12 4868

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| A | FR-A-2386582 (CHEMISCHE WERKE HULS AKTIENGESELLSCHAFT)<br>* Ansprüche 1-3 *<br>--- | 1-4, 10 | C08L77/00//<br>(C08L77/00;<br>77:12; 67:02) |
| A | FR-A-2208934 (BAYER AKTIENGESELLSCHAFT)<br>* Ansprüche 1-4 *<br>----- | 1-4,<br>7-10 | |

| RECHERCHIERTE SACHGEBIETE (Int. Cl.5 ) |
|---|
| C08L |

Der vorliegende Recherchenbericht wurde für alle Patentansprüche erstellt

| Recherchenort | Abschlußdatum der Recherche | Prüfer |
|---|---|---|
| DEN HAAG | 28 MAI 1991 | GLANDDIER A. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)